(19) Europäisches Patentamt
European Patent Office
Office européen des brevets

(11) **EP 3 298 217 B1**

(12) **EUROPEAN PATENT SPECIFICATION**

(45) Date of publication and mention
of the grant of the patent:
**01.05.2019 Bulletin 2019/18**

(51) Int Cl.:
*E04H 9/02* *(2006.01)*    *E04B 1/98* *(2006.01)*
*F16F 7/00* *(2006.01)*

(21) Application number: **16734731.9**

(22) Date of filing: **17.05.2016**

(86) International application number:
**PCT/IB2016/052854**

(87) International publication number:
**WO 2016/185376 (24.11.2016 Gazette 2016/47)**

(54) **SEISMIC ISOLATOR DEVICE**

SEISMISCHE ISOLATORVORRICHTUNG

DISPOSITIF ISOLATEUR SISMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2015  IT UB20150803**

(43) Date of publication of application:
**28.03.2018 Bulletin 2018/13**

(73) Proprietor: **Universitá Degli Studi Di Salerno
84084 Fisciano (SA) (IT)**

(72) Inventor: **FRATERNALI, Fernando
84084 Fisciano (SA) (IT)**

(74) Representative: **Scilletta, Andrea
IP Sextant s.r.l.
Via Antonio Salandra, 18
00187 Roma (IT)**

(56) References cited:
**WO-A1-2013/081382     WO-A1-2014/033986
WO-A1-2014/206168     US-A1- 2014 126 322**

**Description**

The present invention relates to an isolator device shaped to isolate a structure or a building from mechanical vibrations, in particular from vibrations generated by a seismic movement.

Seismic waves provided by earthquakes cause the structures swinging and swaying in different ways, depending on the frequency, the typology of ground motion (motion or vibrating wave), the height and typology of building.

Buildings isolator devices are known, that are used to prevent damage or structural failure caused by the oscillations resulting from a seismic activity.

These devices are mainly active or passive, depending on whether or not they require the use of an external energy source.

The passive devices utilize the energy generated by the response of the structure to provide the forces for vibrations control and isolation.

In the prior art, the seismic isolation of a structure is obtained by placing the construction on isolators floor made of rubber - or elastomeric - multilayer, reinforced by metal sheets.

The insulators are very deformable in the horizontal direction in such a way as to allow an oscillation of the construction as a rigid body.

Interposing the insulators, which have a high vertical stiffness and low horizontal stiffness, between the foundation and buildings, the earthquake frequencies are decoupled from the building frequencies and the resonance phenomena are prevented.

In this way the isolated structure behaves during an earthquake almost like a rigid body which tends to remain stationary with respect to ground vibrations.

Viscoelastic damping devices are also known, using the deformation of viscoelastic materials as a means to dissipate energy. The viscoelastic materials fall completely in their original shape after deformation, with a certain amount of energy lost as heat. However, the stiffness and the dampening properties of viscoelastic polymers depend on the deformation level in the material, on its temperature and on the loading frequency.

WO 2014/033986 A1 discloses a seismic isolator device according to the state of the art.

A disadvantage of the known devices is that they must be designed in such a way as to present a fundamental period of oscillation exceeding that of the non-isolated structure. Therefore, such devices involve high engineering costs.

A further disadvantage is that the prior art devices require a significant relative movement between the parts, to operate correctly.

A still further disadvantage is due to the fact that the elastomeric materials are subject to aging phenomena and viscous deformation ("creep") which change the chemical and physical properties over time. Frequent maintenance operations are therefore needed that affect the cost of the installed equipment.

Therefore, the technical problem posed and solved by the present invention is to provide a seismic isolator device that allows to overcome the drawbacks mentioned above with reference to prior art.

This problem is solved by an isolator device according to claim 1. Preferred features of the present invention are shown in the dependent claims.

Advantageously, the object of the present invention allows to optimize the insulating properties of the device by means of the possibility to adapt the mechanical properties of the deformable layer - through a variation of the lattice and of the material - to those of the structure to be insulated.

A further advantage of the device object of the present invention resides in the fact that it can be designed to have a total, or almost total, isolation capacity in respect of vibrations induced by shear waves. The isolation provided by said device in respect of the shear waves is in fact almost total at a shear modulus of the device approximately equal to zero; it is instead partial at a tangential elastic modulus of some order lower than the volumetric compressibility modulus, although different from zero.

The seismic isolator devices of prior art made of rubber and metal sheets are not able to reach the shear modulus close to the zero and, simultaneously, sufficiently high value of volumetric compressibility modulus, which makes these devices not particularly suitable for the isolation of seismic highly deformable structures and buildings, which are equipped with particularly high values of fundamental vibration periods.

A still further advantage is the possibility of increasing the duration of the life cycle of the device, for example by varying the material of the deformable layer, without changing the elastic properties of the device, which are related to the lattice structure of the deformable layer.

Still, advantageously, the object of the present invention enables a measurement and a dynamic adjustment of the properties of the deformable material thus increasing the insulation effectiveness.

Other advantages, features and the modes of employ of the present invention will become evident from the following detailed description of some embodiments, given by way of example and not limitative purpose.

The present invention will be now described, for illustrative but not limitative purposes, according to its preferred embodiments, with particular reference to the Figures of the accompanying drawings, in which:

Figure 1a shows a first schematic front view of a layered structure of an embodiment of the isolator device according to the present invention;

Figure 1b shows the structure of Figure 1a in a deformed shape;

Figure 2 shows a perspective view of a unit cell (a) and of a primitive cell (b) of the lattice of Figure 1a;

Figure 3 shows a comparison graph between the loading curves $\tau/\Upsilon$ relating to the object according to the invention and a prior art device;

Figure 4 shows a comparison graph between the loading curves $\sigma/\epsilon$ relating to the object according to the invention and a prior art device;

Figure 5 shows a comparison graph between curves relating to the prior art simulations; and

Figure 6 shows a pentamode (a), simple cubic (b), BCC (c), Octet truss (d) and Tetrakaidecahedron primitive cell.

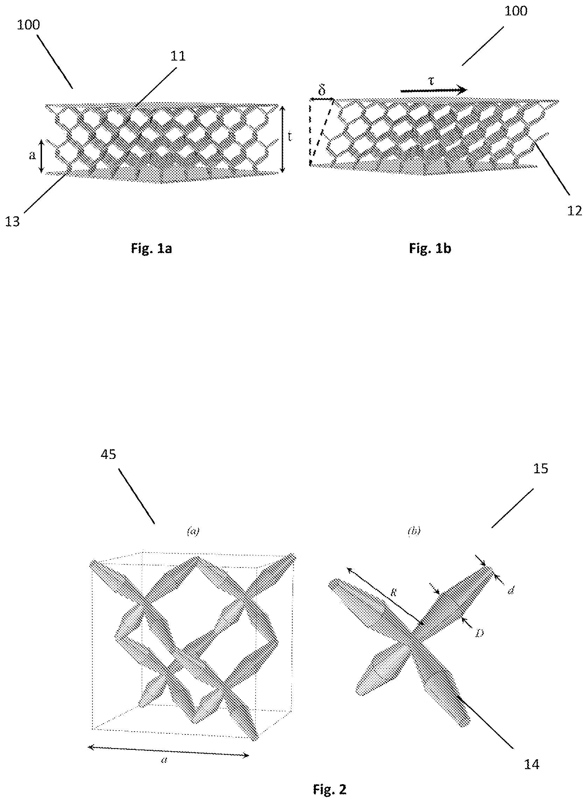

Referring to Figures 1a and 1b, it can be observed that in a preferred embodiment of the seismic isolator device according to the present invention comprises a layered structure 100 and is shaped to be positioned at the base of a building to absorb a vibration resulting from a seismic movement. The stratiform structure has an intermediate layer 12 made of an at least partially deformable material of pentamode type. The intermediate layer is between an upper laminar element 11 and a lower laminar element 13 made of a rigid material, for example a metallic material such as steel.

Advantageously, the pentamode materials are reticular materials having adjustable compression and shear elastic modulus, in function of the dimensions of the membranes and of the nodes and of the mechanical properties of the materials used. The pentamode fall within the field of metamaterials and are formed from structural patterns of periodic type at different scales, optionally combinable with concentrated masses and/or matrix materials. The pentamode materials exhibit unconventional mechanical properties, which are closely related to the geometrical characteristics of the structural grids that compose them and only in a minor part are related to the nature of the materials used. Such properties include, for example relationships between resistance (or stiffness) and weight of "extreme" type (i.e. with very soft deformation modes and ways of very rigid deformation); excellent deformation resilience; auxetic behaviour (characterized by Poisson coefficients less than zero); almost total insulation from vibrations capacity at certain frequency ranges ("band-gap" materials); capacity of acoustic isolation and re-direction of the mechanical vibrations; mass and stiffness actual density near zero or less than zero in the dynamic field; negative indices of refraction; functioning as acoustic superlens and/or for the local confinement of mechanical waves.

The pentamode materials are also known as "extreme materials". This definition has been established to comprise a variety of composite materials, periodic lattices, structural foams, cellular materials, which simultaneously show very "soft" and very "rigid" deformation modes. Extreme materials are identified as unimode, bimode, trimode, quadrimode or pentamode, in relation to the number of soft mode they have.

In particular, the pentamode lattices have five "soft" modes and just one "rigid" mode. The latter coincides with the volumetric deformation mode of the material (so-called "spherical" deformation).

A pentamode material therefore has a very high volumetric elastic modulus and tangential elastic modules value substantially null or about zero.

They are solid materials that have a mechanical behaviour very similar to that of the fluid materials (i.e. low compressibility and high shear deformability).

A recent study (A.N. Norris, Mechanics of elastic networks. Proceedings of the Royal Society of London A, 470, 20140522, 2014) discloses an approach from discrete to continuous for the estimation of elastic moduli of various periodic lattice structures, including unit cells of pentamode type materials, simple cubic crystal cells, a body-centred cubic crystal cells (BCC), "octet truss" cells and tetrakaidecahedron geometry cells. The main results obtained in this study, are briefly disclosed below with reference to the general case of a periodic lattice of the d-dimensions space. The primitive cell of that lattice, defined as the smallest volume that generates the lattice through the tessellation of the space (set of adjacent identical polyhedra that completely cover the three-dimensional space), is composed of a polyhedron built around a central node, and includes a Z number of closed nodes (border) connected to the central node through solid members (or rods). The symbol V is utilized to denote the volume occupied by that cell. With reference to the above typology of unit cells examined, the effective elasticity tensor of the lattice (mesoscopic scale) is provided with cubic symmetry, being characterized by only three stiffness coefficients, independent to each other (coefficients Cn, $C_{12}$ and $C_{44}$, according to the Voigt notation).

The axial and bending deformations of the lattice members are respectively defined as follows:

$$M_i = \int_0^{R_i} \frac{dx}{E_i A_i}$$

(1)

$$N_i = \int_0^{R_i} \frac{x^2 dx}{E_i I_i}$$

wherein: x is an abscissa introduced along the longitudinal development of the generic member, with origin into the confluence node of the members within the unit cell; $R_i$, $E_i$, $A_i$ and $I_i$ are respectively the length, the Young modulus, the area of the cross section and the inertial moment of the cross section of the $i^{th}$ rod, which assumes with polar symmetry (i = 1, ..., Z). Neglecting the forces generated in the members as a result of the nodes deformation and following the approach from discrete to continuum suggested by Norris' work, it is easy to arrive to the results presented in Table I (wherein some unit cells are summarized and mechanical properties of alternative embodiments of reticular materials).

In particular, $K = (C_{11} + 2C_{12})/3$ denotes the volumetric compressibility module (orvolume elastic modulus); $G = \mu_1 = C_{44}$ denotes the main elastic modulus (or shear modulus) and $\mu_2 = (C_{11} - C_{12})/2$ denotes a second modulus of tangential elasticity of the lattice. All lattices examined in Table I, with the exception of that corresponding to the case with Z = 14 (tetrakaidecahedron cells lattice), are characterized by members identical between each other, i.e. which are equipped by equal values of the quantities $R_i$, $M_i$, and $N_i$, in the following denoted, respectively, by symbols R, M e N. The tetrakaidecahedron cell derives from the union of a simple cubic cell with sides of length a (Z = 6) - composed by members identical between each other having length $R_1 = \sqrt{2}a$ and deformability $M_1$ e $N_1$ - and a cell BCC (Z = 8) truncated by a regular octahedron having edges with length a - made up by members having identical length $R_2 = \sqrt{\frac{3}{2}}a$ and deformability $M_2$ e $N_2$.

The limit behaviour of the lattice dominated by the extensional deformation (or "stretch-dominated regime") is characterized by flexural deformation tending to infinity ($N_i \rightarrow \infty$), i.e. flexural stiffness negligible compared to the extensional stiffness.

At this regime, it is possible to deduce from the results reported in Table II below (which shows the geometrical properties of an intermediate pentamode layer of alternative embodiments of the insulator device according to the invention) that the pentamode lattice (Z = 4) has both the shear elastic moduli null ($G = \mu_2 = 0$) and only the volume module K different from zero. Said regime corresponds in fact to the theoretical pentamode behaviour disclosed above, with 5 soft deformation modes and only one rigid deformation mode (the deformation mode with material volume variation or spherical deformation mode).

This mechanical behaviour is quite similar to that of the fluid materials with almost null viscosity, which justifies the definition of "fluid" material of "solid" typology (or "solid-water"), which is often associated to pentamode lattice.

Table I

| Primitive cell | K | G/K | $\mu_2$/K | V |
|---|---|---|---|---|
| Pentamode (Z=4) Figure 6a | $\dfrac{4R^2}{9MV}$ | $\dfrac{9M}{4M + 2N}$ | $\dfrac{3M}{2N}$ | $\dfrac{64}{3\sqrt{3}}R^3$ |
| Simple Cubic (Z=6) Figure 6b | $\dfrac{2R^2}{3MV}$ | $\dfrac{3M}{2N}$ | 3/2 | $8R^3$ |
| BCC (Z=8) Figure 6c | $\dfrac{8R^2}{9MV}$ | $1 + \dfrac{M}{2N}$ | $\dfrac{3M}{2N}$ | $\dfrac{32}{3\sqrt{3}}R^3$ |
| "Octet truss" (Z=12) Figure 6d | $\dfrac{4R^2}{3MV}$ | $\dfrac{3}{4} + \dfrac{3M}{4N}$ | $\dfrac{3}{8} + \dfrac{9M}{8N}$ | $4\sqrt{2}R^3$ |

(continued)

| Primitive cell | K | G/K | $\mu_2$/K | V |
|---|---|---|---|---|
| Tetrakaideca hedron (Z=14) Figure 6e | $\frac{1}{9V}\left[\frac{6R_1^2}{M_1}+\frac{8R_2^2}{M_2}\right]$ | $\frac{3}{2}\frac{{}^1/_{M_1}+{}^1/_{N_2}}{{}^1/_{M_1}+{}^1/_{M_2}}$ | $\frac{{}^1/_{N_2}+{}^2/_{M_2}+{}^3/_{N_1}}{2\left({}^1/_{M_1}+{}^1/_{M_2}\right)}$ | $8\sqrt{2}a^3$ |

The isolator device according to the present invention comprises an intermediate layer 12 at least partially deformable, or a layer of material that is deformable, in particular, to absorb shear forces. In particular, the pentamode material used is shaped like a lattice comprising a plurality of unit cells 45, optionally formed as a face centred cubic crystal, as shown in Figure 2(a). It is still possible to provide other embodiments having other pentamode geometries, realizing, in a very arbitrary manner, lattices having a number of members directed in the generic node equal to d+1, where d is the spatial dimension of the device (d=3 in the case of three-dimensional devices; d=2 in the case of two-dimensional devices).

Preferably, each unit cell comprises four primitive cells tessellated to each other, or adjacent. As shown in Figure 2(b), a primitive cell includes four members 14 (Z=4), optionally positioned according to a tetrahedral structure. Therefore, by tesselling four primitive cells, a unit cell is obtained which contains a total of 16 members.

As shown in Figure 2(b), the preferred embodiment of the device according to the present invention provides a unit cell having a face-centred cubic crystal shape, with a side length a and members (14) having equal length R.

In particular, the length R of the members is related to the dimension a (i.e. the so-called "constant") characteristic of the lattice, through the following relation:

$$R = \frac{\sqrt{3}a}{4} \qquad (2)$$

In particular, as shown in Figures 2(a) and 2(b), the members 14 of the unit cell 45 are shaped as an oblong element with variable diameter, for example the shape of each members comprises two truncated cones joined together at the base having greater diameter.

In the present example each member is symmetric with respect to its centreline portion. In the preferred embodiment, each member has a maximum diameter D at the center line and a minimum diameter d at each end.

In alternative embodiments, the membes 14 can have lengths and shapes different from each other.

The considerations which follow refer to pentamode lattices generated through tessellation of unit cells of the type illustrated in Figure 2(a).

The conclusions below can, however, be easily generalized to any other type of pentamode lattice, which has members with different characteristics dimensions at the middle and at the ends.

In the present example, in the cell of Figure 2(b), the variation law of the radius r of the generic straight section of a member 14 with the abscissa x is the following

$$r(x) = r_{min} + \left(\frac{r_{max} - r_{min}}{R/2}\right)x, \; 0 \le x < \frac{R}{2} \qquad (3)$$

$$r(x) = r_{max} - \left(\frac{r_{max} - r_{min}}{R/2}\right)\left(x - \frac{R}{2}\right), \; \frac{R}{2} \le x \le R \qquad (3)$$

wherein $r_{min}$= d/2 and $r_{max}$ = D/2 .

Using the above mentioned expression, and taking into account that the current cross section of the generic member has area and moment of inertia, respectively, equal to:

$$A(x) = \Pi[r(x)]^2$$

and

$$I(x) = \Pi \frac{[r(x)]^4}{4},$$

the following expressions of axial and bending deformation of the generic oblong member, are obtained:

$$M = \frac{R}{\Pi E r_{max} r_{min}}$$

(4)

$$N = \frac{R^3 (2r_{max}^2 + r_{max} r_{min} + r_{min}^2)}{3 \Pi E r_{max}^3 r_{min}^3}$$

Wherein E denotes the Young's modulus of the material of the member 14. Using the expressions of M and N in the expressions of K and G/K ratio given in Table I (with Z=4):

$$K = \frac{4R^2}{9VM} = \frac{\Pi E dD}{64\sqrt{3}R^2},$$

(5)

$$G = \frac{9\sqrt{3}\Pi(dD)^3 E}{768(dDR)^2 + 512(d^2 + 2D^2 + dD)R^4}$$

(6)

$$\frac{G}{K} = \left[ \frac{4}{9} + \frac{8(2D + dD + d^2)R^2}{27d^2 D^2} \right]^{-1}$$

(7)

In a further study carried out in the prior art (M. Kadic, et al. On the practicability of pentamode mechanical metamaterials. Applied Physics Letters, 100, 191901, 2012) a numerical estimate of G/K ratio was evaluated using data collections obtained by means of finite element numerical simulations of the deformation of pentamode lattices under hydrostatic pressure and pure shear stress.

The numerical estimate provided in the prior art has the following expression:

$$\frac{G}{K} = \left[ \left( \frac{R}{d} \right)^2 \sqrt{\frac{R}{D}} \right]^{-1}$$

(8)

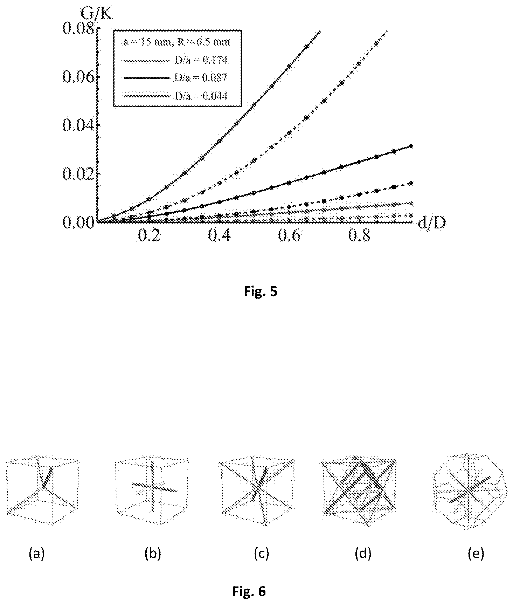

In Figure 5, a comparison between the expressions of the G/K ratio corresponding to the two above models is shown (that is, a comparison between the expressions (7) and (8)).

In particular, the data shown in Figure 5 were obtained assuming a lattice characteristic constant a= 15mm (R = 6.5mm); D/a ratios equal to D/a = 0.174, D/a = 0.087 or D / a = 0.044; and by varying the ratio d/D from zero to one. In the graph shown in Figure 5 the continuous curves were obtained by applying the analytical report (7) while the dashed curves are related to the empirical relation (8).

In the present example, the limit cases d/D=0 and d/D=1 correspond, respectively, to a pentamode structure in a regime dominated by extensional deformation (nodal connections of hinged type), and to a pentamode structure with cylindrical oblong elements having constant section (bending stiffness different from zero).

The differences between the values obtained by applying the empirical relationship and the analytic relationship above mentioned, are justified by the fact that the analytic formula (7) was obtained on the basis of a model that adopts beam elements for the members (one-dimensional theory), while the numerical formula (8) was obtained from finite element models with 3D solid elements (tetrahedral finite element mesh).

Both the estimates show that the shear modules of the pentamode lattices can be adjusted appropriately designing the characteristic dimensions of the oblong elements d and D.

Therefore, advantageously, the mechanical and acoustic properties of a pentamode lattice vary, suitably designing the shape of each member (for example by varying the ratio d/D) and mainly depend on the geometry of the lattices.

In addition, although to a minor way with respect to the lattices geometry, the above mentioned properties vary depending on the specific material with which members are realized.

In particular, the dissipation capacity of the isolator device according to the present invention can be modulated through a suitable selection of the material used for the realization of pentamode lattices. For example, members 14 can be realized by metallic material, using the energy dissipation capacity of the material as a result of anelastic deformation mode; or, optionally, members 14 can be realized by polymeric or glass material, using the energy dissipation capacity of the material due to tangential strains.

The specific configuration of the reticular structure helps to define the mechanical properties in the elastic phase of the pentamode material. Furthermore, the possibility to choose a specific material for the realization of the pentamode lattice - with equal structure and therefore with equal mechanical properties in the elastic phase - allows to adapt the energy dissipation capacity and the duration of the life cycle of the device insulator (or its durability) to the actual conditions of use, further reducing the required maintenance costs.

Therefore, it is possible to adapt the mechanical properties of the pentamode insulators to those of the structure or building to be insulated, by varying the geometry of the pentamode lattice and the nature of the used materials (for example as shown in relation (6) and in Table II). On the contrary, in the known elastomeric insulators, the achievement of very low values of the tangential elastic modulus, is typically associated to a drastic reduction of the vertical bearing capacity, making such insulators not particularly suitable for structures having very high vibration periods (i.e. particularly tall buildings, very deformable structures, foundations on particularly soft soils, etc.).

Moreover, through the design and the realization of composite laminated material insulators obtained by forming soft pentamode layers with different geometries and materials inserted between rigid confinement, it is possible to optimize the properties of the isolator device in relation to the application need.

This possibility is very limited in the elastomeric isolators currently available on the market, since in the latter the only variable lamination usable for the optimized design of composite laminates devices consists in the choice of the type of rubber (natural or synthetic) to be used for the deformable layers.

In an alternative embodiment, the isolator device according to the present invention further comprising a central element (so-called "core") made of dissipative material, optionally lead, in order to increase the dissipation capacity of the device.

A further embodiment of the device according to the present invention further provides sensors positioned at selected elements of pentamode lattices to allow a measurement of the lattice response to external solicitations and evaluate for example a state of structure degradation.

Optionally, by the positioning of at least one actuator at the lattice, it is possible to perform a dynamic adjustment of the lattice properties.

The dynamic adjustment of the device properties can be obtained by introducing actuators whit any principle, which are able to change the length and/or the solicitation state of the members composing the device (such as, for example, mechanical, electrical, piezoelectric, electromagnetic, or telescopic actuators made of shape memory alloy, at different scales). In particular, through an appropriate positioning of the actuators it will be possible to modify the geometric and/or mechanical characteristics, or the size and/or the masses of the junctions interposed between members.

In particular, by placing suitable actuators and/or sensors for example at a lattice member or junction, it will be possible to vary the response of the device depending on the specific stress received and measured.

The pentamode lattice of the device according to the present invention can also be advantageously manufactured by means of 3D printing techniques, additive or subtractive, at different scales. This technique provides the transfer of aided computational design ("computer aided design" or CAD), produced by a preliminary optimization phase of the geometry and of the device material, to a 3D printer that may employ one or more printing materials (metals, polymers, etc.).

The inventors of the present invention according to the present invention have performed a comparative analysis between some embodiments of insulator devices according to the present invention and traditional insulator and dissipation systems, highlighting the considerable technical advantage of pentamode insulators in the structural engineering field, thanks to the easy adjustment of their mechanical and durability properties, as a function of the pentamode lattices geometry of and of the characteristics of the used materials, and that they offer the possibility to realize composite laminates systems of non-conventional type.

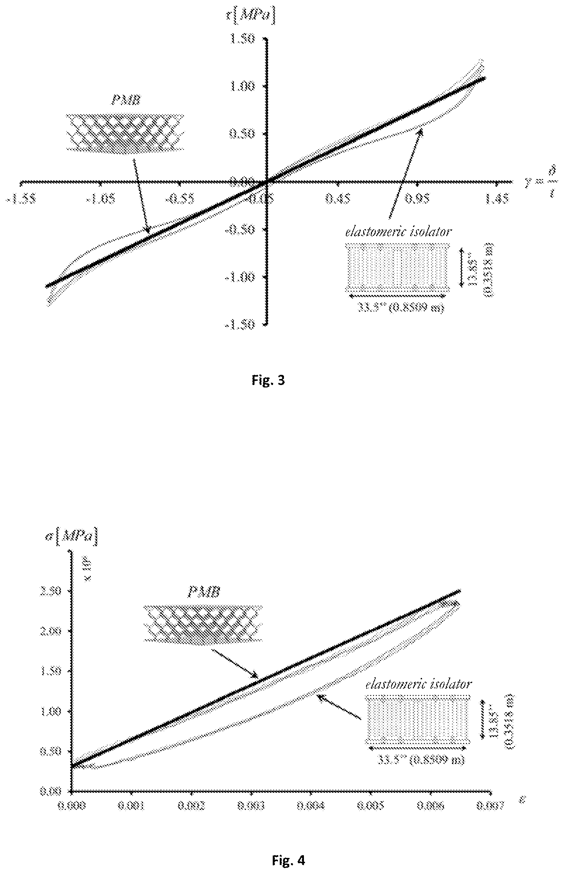

Taking into consideration a commercial elastomeric isolator having diameter Ø33.5"(0.8509m) and height 13.85"(0.351m), composed by 29 rubber layers having thickness equal to 7mm, 28 steel elements having thickness equal to 3.04mm, two terminal rubber layers having thickness equal to 31.8mm and two in the closure steel elements (isolator E Type [RB-800] produced by Dynamic Isolation Systems, Inc, McCarran, NV, USA, hereinafter referred to as "comparative elastomeric isolator"). Figures 3 and 4 show the hysteretic responses (low-dissipation) of that isolator, in terms of load cycles with constant speed shear stress ($\tau$) - shear deformation ($\gamma$) and normal tension ($\sigma$) - axial strain ($\varepsilon$).

The latter were obtained by applying a vertical preloading $\sigma$ = 0.31*MPa* (source: Caltrans Testing Facility, University of California, San Diego). The experimental results shown in Figures 3 and 4 provide a medium shear module $\overline{G}$= 0.791*MPa,* and a medium compression module of the rubber-steel composite system equal to: $\overline{E}_c$ = 330*MPa.*

Embodiments of insulator devices according to the present invention, which hereinafter will be called simply the "pentamode insulators" or PMB (acronym of the English term "PentaMode Bearing"), can be designed by placing layers of pentamode lattices ("soft or deformable layers") alternating to "hard" material layers, such as for example, steel layers ("hard layers").

Table II show the mechanical properties of the embodiments of different types of pentamode insulators. The pentamode layers of such systems are constructed by replicating the unit cell illustrated in Figure 2(b) for $n_a \times n_a$ times in the horizontal plane and for $n_v$ times in the vertical direction. In Table II it is assumed - purely by way of example -$n_v$ = 1, obtaining a thickness of the pentamode layer equal to: $t \equiv a$. Nella. In the same table, again by way of example, for the pentamode layer material have been examined, alternatively, a steel with Young's modulus $E$ = 206 *GPa* (obtaining pentamode isolators SPMB1 and SPMB2) and the polymer "FullCure850 VeroGray" having Young's modulus $E$ = 1.4 *GPa,* which it is commonly used as a printing material in 3D printers manufactured by the famous company Stratasys® (obtaining pentamode isolators PPMB1 and PPMB2).The isolators in Table II correspond to different values of the geometric parameters *a, D* and *d*, which identify the geometry of the pentamode lattice.

To estimate the pentamode insulator shear elastic modulus, the above formula (5) has been used, while for the calculation of the compression elastic modulus the following formula has been used:

$$E_c = 6.73 G S_1^2 \qquad (7)$$

wherein the following form factor: $S_1 = \dfrac{L^2}{4tL} = \dfrac{n_a}{4n_v}$ has been introduced, having denoted by *L* the side of the intermediate pentamode layer.

The above mentioned formulas lead to obtain a shear modulus $G$ = 0.791*MPa* and a compression module $E_c$ =341*MPa* for the pentamode insulators described in Table II. These modules are practically coincident with the medium module values of the elastomeric comparison insulator (respectively $\overline{G}$ = 0.791*MPa* and $\overline{E}_c$ = 330*MPa*), which demonstrates the ability of the analysed pentamode systems to replicate the mechanical and insulation properties of a commercial elastomeric isolator.

Figures 3 and 4 show a comparison between the experimental stress-strain curves of the insulator, and stress-deformation linear laws corresponding to the elastic modules of pentamode insulators of Table II, overlooking, as first approximation, the energy dissipation properties of these latter systems.

In particular, Figure 3 shows a comparison between the constitutive shear bond of the pentamode insulators (PMBs) in Table II and the experimental shear response of a comparison elastomeric isolator. Figure 4 shows a comparison between the axial constitutive bond of pentamode insulators in Table II and the experimental response of a comparison elastomeric isolator.

Table II

| Isolator | $t \equiv a$[mm] | R[mm] | $n_a$ | $L = n_a a$[m] | $d = \dfrac{D}{2}$ [mm] |
|---|---|---|---|---|---|
| SPMB1 | 5 | 2.17 | 32 | 0.16 | 0.19 |
| SPMB2 | 10 | 4.33 | 32 | 0.32 | 0.37 |
| PPMB1 | 5 | 2.17 | 32 | 0.16 | 0.66 |
| PPMB2 | 10 | 4.33 | 32 | 0.32 | 1.32 |

Different devices based on the use of pentamode lattices confined between plates of hard material have been designed and compared, estimating for each of them the main mechanical characteristics, that is, the tangential elastic modulus (or shear modulus) and the compression elastic modulus. The results obtained have allowed to highlight that the mechanical response of pentamode insulators can be modulated by suitably designing the flexural stiffness and the geometric characteristics of the members and nodes of pentamode lattices. It is also observed that these characteristics can be made virtually coincident with those of the traditional elastomeric isolators.

Preferred embodiments have been described above and some alternatives of the present invention have been suggested, but it is to be understood that the skilled persons can make modifications and changes, without departing from the related scope of protection, as defined by the attached claims.

**Claims**

1. Seismic isolator device shaped to be positioned at the base of a building to absorb a vibration arising from a seismic movement, comprising a layered structure (100) in which an intermediate layer (12) made of a material at least partially deformable, is located between an upper laminar element (11) and a lower laminar element (13) made of a rigid material, **characterized in that** said intermediate layer is made of a pentamode material.

2. Isolator device according to the previous claim, wherein said pentamode material is shaped as a lattice comprising a plurality of unit cells (45).

3. Isolator device according to the previous claim, wherein each unit cell (45) of said plurality of unit cells (45) is shaped like a face-centred cubic crystal.

4. Isolator device according to any one of claims 2 or 3, wherein each of said unit cells (45) includes four primitive cells (15) adjacent to each other.

5. Isolator device according to the previous claim, wherein each of said primitive cells (15) comprises four members (14).

6. Isolator device according to the previous claim, wherein said members (14) are positioned according to a tetrahedral structure.

7. Isolator device according to any one of claims 5 or 6, wherein each of said members (14) is shaped as an oblong element with a variable diameter.

8. Isolator device according to the previous claim, wherein said oblong element has a diameter (D) maximum at a centreline portion and a minimum diameter (d) at each end.

9. Isolator device according to any of claims 5 to 8, wherein said members (14) have equal length (R).

10. Isolator device according to any of claims 5 to 9, wherein said members (14) are made of metallic material, optionally in a ceramic material, more optionally in polymeric material.

11. Isolator device according to any one of the preceding claims wherein at least one of said upper layer and lower layer is made of steel.

12. Isolator device according to any one of the preceding claims, comprising at least one sensor positioned or positionable at said lattice to allow for a measurement of a received solicitation.

13. Isolator device according to any one of the preceding claims, comprising at least one actuator positioned or positionable at said lattice to allow a dynamic adjustment of the lattice.

14. Isolator device according to any one of the preceding claims, further comprising a central element made of dissipative material, optionally made of lead.

15. Isolator device according to any one of the preceding claims, comprising a plurality of layered structures (100) and a plurality of intermediate layers (12) alternating between them.

**Patentansprüche**

1. Seismische Isolationsvorrichtung, die dazu geformt ist, an der Basis eines Gebäudes positioniert zu werden, um eine Vibration zu absorbieren, die durch eine seismische Bewegung hervorgerufen wird, umfassend eine Schichtstruktur (100), bei der eine Zwischenschicht (12), die aus einem zumindest teilweise verformbaren Material besteht, zwischen einem oberen Flächenelement (11) und einem unteren Flächenelement (13) aus einem festen Material angeordnet ist, **dadurch gekennzeichnet, dass** die Zwischenschicht aus einem Pentamode-Material besteht.

2. Isolationsvorrichtung nach dem vorhergehenden Anspruch, wobei das Pentamode-Material als ein Gitter geformt ist, welches eine Mehrzahl von Einheitszellen (45) umfasst.

3. Isolationsvorrichtung nach dem vorhergehenden Anspruch, wobei eine jede Einheitszelle (45) der Mehrzahl von Einheitszellen (45) wie ein kubisch flächenzentrierter Kristall geformt ist.

4. Isolationsvorrichtung nach einer der Ansprüche 2 oder 3, wobei eine jede der Einheitszellen (45) vier primitive Zellen (15) hat, die aneinander angrenzen.

5. Isolationsvorrichtung nach dem vorhergehenden Anspruch, wobei eine jede der primitiven Zellen (15) vier Elemente (14) enthält.

6. Isolationsvorrichtung nach dem vorhergehenden Anspruch, wobei die Elemente (14) gemäß einer tetraedrischen Struktur angeordnet sind.

7. Isolationsvorrichtung nach einem der Ansprüche 5 oder 6, wobei ein jedes der Elemente (14) als ein längliches Element mit einem variablen Durchmesser geformt ist.

8. Isolationsvorrichtung nach dem vorhergehenden Anspruch, wobei das längliche Element einen Durchmesser (D) hat, der an einem Mittellinienabschnitt am Größten ist und einen minimalen Durchmesser (d) an jedem Ende aufweist.

9. Isolationsvorrichtung nach einem der Ansprüche 5 bis 8, wobei die Elemente (14) eine gleiche Länge (R) haben.

10. Isolationsvorrichtung nach einem der Ansprüche 5 bis 9, wobei die Elemente (14) aus einem metallischen Material bestehen, optional in einem keramischen Material, weiter optional in einem Polymermaterial bestehen.

11. Isolationsvorrichtung nach einem der vorhergehenden Ansprüche, wobei mindestens eine der oberen und der unteren Schicht aus Stahl besteht.

12. Isolationsvorrichtung nach einem der vorhergehenden Ansprüche, die mindestens einen Sensor umfasst, der an dem Gitter angeordnet oder anordenbar ist, um eine Messung einer empfangenen Anregung zu gestatten.

13. Isolationsvorrichtung nach einem der vorhergehenden Ansprüche, umfassend mindestens einen Aktor, der an dem Gitter angeordnet oder anordenbar ist, um eine dynamische Einstellung des Gitters zu gestatten.

14. Isolationsvorrichtung nach einem der vorhergehenden Ansprüche, die ferner ein zentrales Element umfasst, das aus einem dissipativen Material besteht, optional aus Blei.

15. Isolationsvorrichtung nach einem der vorhergehenden Ansprüche, umfassend eine Mehrzahl von Schichtstrukturen (100) und eine Mehrzahl von Zwischenschichten (12), die zwischen ihnen abwechseln.

**Revendications**

1. Dispositif isolateur sismique formé pour être positionné à la base d'un bâtiment pour absorber une vibration provenant d'un mouvement sismique, comprenant une structure en couches (100) dans laquelle une couche intermédiaire (12), constituée d'un matériau au moins partiellement déformable, est située entre un élément laminaire supérieur (11) et un élément laminaire inférieur (13) constitué d'un matériau rigide, **caractérisé en ce que** ladite couche intermédiaire est constituée d'un matériau pentamode.

2. Dispositif isolateur selon la revendication précédente, dans lequel ledit matériau pentamode est sous la forme d'un treillis comprenant une pluralité de cellules d'unité (45).

3. Dispositif isolateur selon la revendication précédente, dans lequel chaque cellule d'unité (45) de ladite pluralité de cellules d'unité (45) est sous la forme d'un cristal cubique à faces centrées.

4. Dispositif isolateur selon l'une quelconque des revendications 2 ou 3, dans lequel chacune desdites cellules d'unité (45) inclut quatre cellules primitives (15) adjacentes les unes aux autres.

5. Dispositif isolateur selon la revendication précédente, dans lequel chacune desdites cellules primitives (15) comprend quatre éléments (14).

6. Dispositif isolateur selon la revendication précédente, dans lequel lesdits éléments (14) sont positionnés selon une structure tétrahédrale.

7. Dispositif isolateur selon l'une quelconque des revendications 5 ou 6, dans lequel chacun desdits éléments (14) est sous la forme d'un élément oblong avec un diamètre variable.

8. Dispositif isolateur selon la revendication précédente, dans lequel ledit élément oblong a un diamètre (D) maximal au niveau d'une partie d'axe central et un diamètre minimal (d) à chaque extrémité.

9. Dispositif isolateur selon l'une quelconque des revendications 5 à 8, dans lequel lesdits éléments (14) présentent une longueur égale (R).

10. Dispositif isolateur selon l'une quelconque des revendications 5 à 9, dans lequel lesdits éléments (14) sont constitués de matériau métallique, éventuellement de matériau céramique, de manière plus éventuelle de matériau polymère.

11. Dispositif isolateur selon l'une quelconque des revendications précédentes, dans lequel au moins l'une de ladite couche supérieure et de ladite couche inférieure est constituée d'acier.

12. Dispositif isolateur selon l'une quelconque des revendications précédentes, comprenant au moins un capteur positionné ou positionnable au niveau dudit treillis pour permettre une mesure d'une sollicitation reçue.

13. Dispositif isolateur selon l'une quelconque des revendications précédentes, comprenant au moins un actionneur positionné ou positionnable au niveau dudit treillis pour permettre un ajustement dynamique du treillis.

14. Dispositif isolateur selon l'une quelconque des revendications précédentes, comprenant en outre un élément central constitué de matériau dissipatif, éventuellement constitué de plomb.

15. Dispositif isolateur selon l'une quelconque des revendications précédentes, comprenant une pluralité de structures en couches (100) et une pluralité de couches intermédiaires (12) alternant entre elles.

100

11

a

t

13

**Fig. 1a**

100

δ    τ

12

**Fig. 1b**

45

(a)

a

15

(b)

R

d

D

14

**Fig. 2**

**Fig. 3**

**Fig. 4**

Fig. 5

(a)      (b)      (c)      (d)      (e)

Fig. 6

## REFERENCES CITED IN THE DESCRIPTION

**Patent documents cited in the description**

- WO 2014033986 A1

**Non-patent literature cited in the description**

- **A.N. NORRIS.** Mechanics of elastic networks. *Proceedings of the Royal Society of London A,* 22 May 2014, vol. 470

- **M. KADIC et al.** On the practicability of pentamode mechanical metamaterials. *Applied Physics Letters,* 2012, vol. 100, 191901